# EUROPEAN PATENT APPLICATION

(11) **EP 3 838 014 A1**
(43) Date of publication of application: **23.06.2021**
(21) Application number: 20215131.2
(22) Date of filing: 17.12.2020
(51) Int. Cl.: A24F 40/44, A24F 40/46, A24F 40/51, A24F 40/00, G01K 1/143, G01K 7/02

(54) **VAPORIZING PART OF MICROPARTICLE GENERATOR**

(30) Priority: 20.12.2019 KR 20190171423
(71) Applicant: EM-Tech Co., Ltd., Changwon-si, Gyeongsangnam-do 51539 (KR)
(72) Inventor: HAN, Seung Joo, 15508 Gyeonggi-do (KR)
(74) Representative: Müller Hoffmann & Partner

(57) **Abstract**

The present invention relates to a vaporizing part of a microparticle generator, and more particularly, to a vaporizing part of a microparticle generator which can prevent carbonization, by using a material having a small difference in heat transfer rate from a heating coil to contain liquid. The vaporizing part of the microparticle generator according to the present invention comprises: a porous carrier for absorbing and storing liquid; a conductive heating pattern coupled to the porous carrier and supplied with power to generate heat; and a sensor pattern coupled to the porous carrier to measure a heating temperature of the conductive heating pattern, wherein the liquid carried by the porous carrier is vaporized as the heating pattern generates heat.

## Description

### TECHNICAL FIELD

The present invention relates to a vaporizing part of a microparticle generator, and more particularly, to a vaporizing part of a microparticle generator which can prevent carbonization, by using a material having a small difference in heat transfer rate from a heating coil to contain liquid.

### BACKGROUND ART

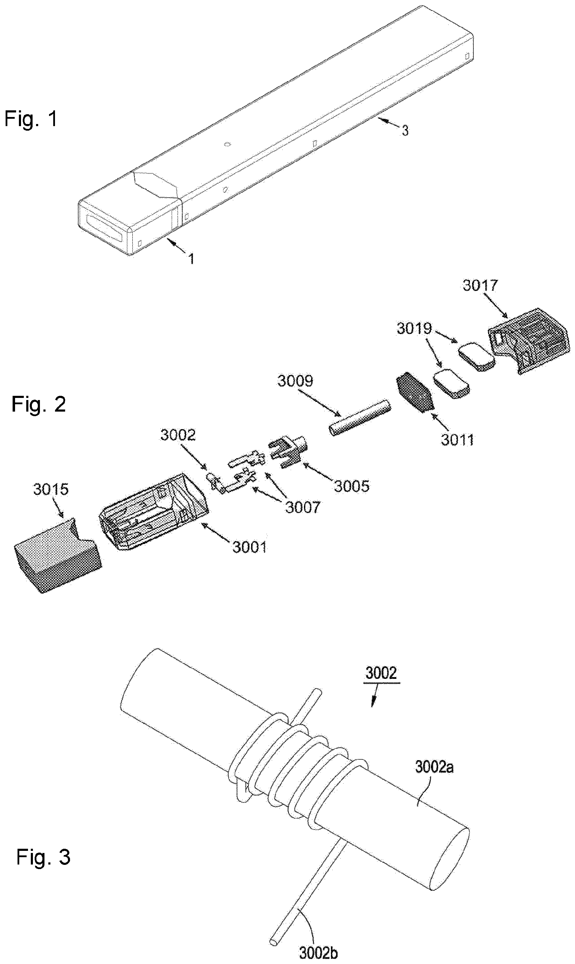

FIG. 1 is a perspective view showing a conventional microparticle generator using a liquid cartridge.

The conventional microparticle generator includes an upper portion of a main body 3 having a battery (not shown), a control circuit (not shown), etc., and a cartridge 1 having a liquid storage tank for storing liquid and an atomizer for receiving liquid from the liquid storage tank and atomizing the liquid. The cartridge 1 is attached and detached to/from the upper portion of the main body 3 in a replaceable manner and supplied with power from the main body 3 to heat liquid and generate microparticles.

FIG. 2 is an exploded view showing the conventional liquid cartridge.

The cartridge includes a liquid storage housing 3001 for storing liquid, an elastomer cap 3011 provided in the liquid storage housing 3001 to divide a liquid storage space and an atomization space, a wick/coil assembly 3002 provided at one end of the liquid storage housing 3001 positioned below the elastomer cap 3011, a wick housing 3005 for securing the wick/coil assembly 3002, a cannula 3009 passing through the elastomer cap 3011 and the liquid storage space, a mouthpiece 3017 separated from the tank for inhalation of microparticles passing through the cannula 3009, and one or more absorbent pads 3019 provided in the mouthpiece 3017 to absorb liquid droplets.

A pair of contact terminals 3007 are connected to the coil of the wick/coil assembly 3002 to receive power from the main body. The contact terminals 3007 are provided through the liquid storage housing 3001, some part of which being exposed to the outside of the housing 3001, the other part of which being positioned in the housing 3001.

In addition, a cover 3015 for protecting the contact terminals 3007 exposed to the outside of the housing 3001 and preventing leakage of liquid, before the cartridge is coupled to the main body, may be coupled to a lower portion of the housing 3001.

When the wick/coil assembly 3002 is provided below the elastomer cap 3011, the air is introduced through pores at the lower portion of the housing 3001, then inhaled through the cannula 3009 with microparticles formed by atomizing the liquid in the wick/coil assembly 3002.

FIG. 3 is a view showing the wick/coil assembly provided in the conventional liquid cartridge. The wick/coil assembly 3002 is prepared by winding a coil 3002b around a wick 3002a made of a silica wick, spongy foam material, fiber material, etc. When power is supplied, the coil 3002b generates heat and vaporizes the liquid contained in the wick 3002a. Here, the local carbonization of the wick 3002a and the liquid may occur due to a difference in heat transfer rate between the wick 3002a and the coil 3002b. The carbonized wick 3002a or liquid may cause discomfort to a user in inhalation and decrease satisfaction. Thus, there is a need for a structure capable of preventing carbonization of a heating part.

### DISCLOSURE OF THE INVENTION

An object of the present invention is to provide a heating part of a microparticle generator that has a structure capable of preventing carbonization.

According to an aspect of the present invention for achieving the above object, there is provided a vaporizing part of a microparticle generator, comprising: a porous carrier for absorbing and storing liquid; a conductive heating pattern coupled to the porous carrier and supplied with power to generate heat; and a sensor pattern coupled to the porous carrier to measure a heating temperature of the conductive heating pattern, wherein the liquid carried by the porous carrier is vaporized as the heating pattern generates heat.

In some embodiments, the porous carrier may have a porosity equal to or greater than 10%.

In some embodiments, the heating pattern may be provided on an outer surface of the porous carrier as a two-dimensional pattern.

In some embodiments, the sensor pattern may be attached to a surface of the porous carrier as a two-dimensional pattern to sense a heating temperature of the heating pattern.

In some embodiments, the heating pattern may be inserted into the porous carrier, and the porous carrier itself may generate heat and vaporize the carried liquid as a three-dimensional structure.

In some embodiments, the sensor pattern may have a two-dimensional pattern or a three-dimensional pattern and may be attached to a surface of the porous carrier or inserted into the porous carrier to measure a heating temperature of the porous carrier.

In some embodiments, the porous carrier and the heating pattern may be made of any one of Pt, W, Mo, Ni, Ta, Ni-Cr alloys, Fe-Cr alloys, Al₂O₃, ZrO₂, MgO, Si₃N₄, SiC, AiN, MoSi₂ and carbon composites, or a combination thereof.

In some embodiments, the sensor pattern may be made of any one of NTC thermistor materials including one or more of Mn, Co, Ni and Fe, PTC thermistor materials including one or more of BaTi₃, Y, Ce, La and Sn, Pt and circuit structures capable of reading resistance variations caused by temperature, or a combination thereof.

A ceramic heater of a microparticle generator provided by the present invention has an advantage in that it can prevent carbonization of a liquid absorbent, by using a material having a small difference in heat transfer rate from a heating coil to contain liquid, generating heat, and vaporizing the liquid.

In addition, a ceramic heater of a microparticle generator provided by the present invention has an advantage in that it can improve dimensional accuracy, by using a porous ceramic to absorb liquid and heating the liquid absorbed in the porous ceramic, since the porous ceramic can be more easily processed than a wick made of a silica wick or cotton.

Further, a ceramic heater of a microparticle generator provided by the present invention has an advantage in that it can improve leakage or deviation of an atomization amount due to little processing deviation and can rapidly atomize liquid due to high thermal conductivity.

### BRIEF DESCRIPTION OF THE DRAWINGS

FIG. 1 is a perspective view showing a conventional microparticle generator using a liquid cartridge.
FIG. 2 is an exploded view showing the conventional liquid cartridge.
FIG. 3 is a view showing a wick/coil assembly provided in the conventional liquid cartridge.
FIG. 4 is a view showing a vaporizing part of a microparticle generator according to a first embodiment of the present invention, when seen from above.
FIG. 5 is a view showing the vaporizing part of the microparticle generator according to the first embodiment of the present invention, when seen from below.
FIG. 6 is a sectional view showing a vaporizing part of a microparticle generator according to a second embodiment of the present invention.
FIG. 7 is a sectional view showing a vaporizing part of a microparticle generator according to a third embodiment of the present invention.

### BEST MODE FOR CARRYING OUT THE INVENTION

Hereinafter, preferred embodiments of a vaporizing part of a microparticle generator according to the present invention will be described in detail with reference to the accompanying drawings.

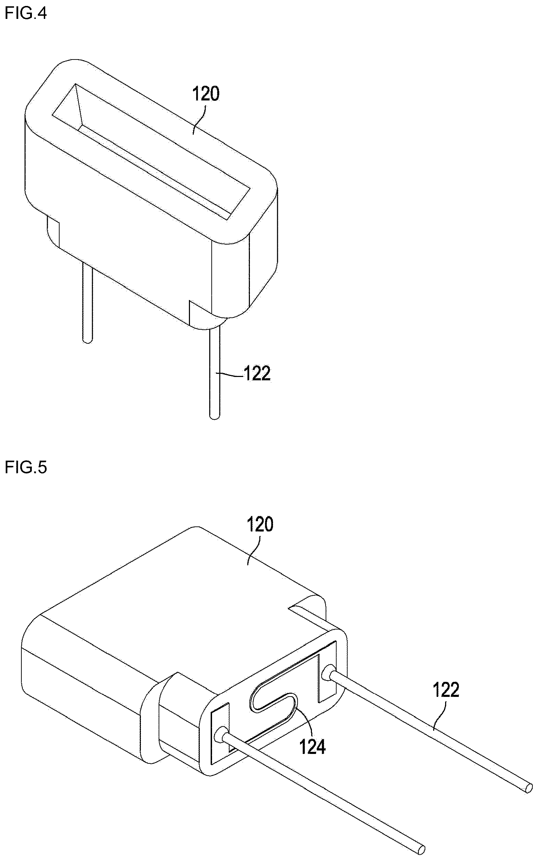

FIG. 4 is a view showing a vaporizing part of a microparticle generator according to a first embodiment of the present invention, when seen from above, and FIG. 5 is a view showing the vaporizing part of the microparticle generator according to the first embodiment of the present invention, when seen from below.

The vaporizing part of the microparticle generator according to the first embodiment of the present invention includes a porous carrier 120 for absorbing and carrying liquid and a heating pattern 122 and 124 attached to a bottom surface of the porous carrier 120 to heat and vaporize liquid. As shown, the heating pattern 122 and 124 is configured with a two-dimensional pattern 124 on the bottom surface of the porous carrier 120. Here, the two-dimensional pattern 124 preferably has a symmetric shape in a horizontal or vertical direction, which makes it possible to evenly heat the porous carrier 120. In addition, the heating pattern 122 and 124 includes a pair of power lines 122 connected to the two-dimensional pattern 124 to supply power.

Here, the heating pattern 122 and 124 is made of any one of Pt, W, Mo, Ni, Ta, Ni-Cr alloys, Fe-Cr alloys, Al₂O₃, ZrO₂, MgO, Si₃N₄, SiC, AiN, MoSi₂ and carbon composites, or a combination thereof.

In addition, the porous carrier 120 is also made of any one of Pt, W, Mo, Ni, Ta, Ni-Cr alloys, Fe-Cr alloys, Al₂O₃, ZrO₂, MgO, Si₃N₄, SiC, AiN, MoSi₂ and carbon composites, or a combination thereof, like the heating pattern 122 and 124.

Thus, when the heating pattern 122 and 124 operates, heat is transferred to the porous carrier 120. Here, since the porous carrier 120 is made of a material with high thermal conductivity, unlike a conventional wick, there is little temperature difference between the two-dimensional pattern 124, which directly generates heat, and the porous carrier 120, which is heated by the two-dimensional pattern 124, as a result of which the porous carrier 120 can be evenly heated. Accordingly, it can reduce the possibility of carbonizing the porous carrier 120 or the liquid carried by the porous carrier 120.

Meanwhile, in the porous carrier 120, liquid slowly flows, and aerosol smoothly moves at high temperature, respective pores of the porous carrier 120 being connected to define an aerosol path. Here, the pores preferably have a size of 10 nm to 10 *µ*m, and more preferably, 0.1 to 1 *µ*m. It is possible to control a storage amount for carrying liquid by adjusting a porosity of the porous carrier 120, thereby controlling an atomization amount in puffing. The porosity is preferably equal to or greater than 10% for smooth inhalation of microparticles.

The porous carrier 120 should be made of a ceramic material with high thermal conductivity and with high durability at high temperature. The thermal conductivity is preferably equal to or greater than 10(W/m·K), and the thermal expansivity is preferably equal to or smaller than 0.4% below 300 □. In addition, preferably, the material should not be severely thermally shrunken, when processed, to obtain high formability, and should maintain high strength even at thermal shock. Therefore, the porous carrier 120 may be made of any one of alumina, SiC, SiN, and SiO₂. Alternatively, the porous carrier 120 may be made of a diatomite made of the aforementioned materials.

The porous carrier 120 may be prepared by powder injection molding. A powder ceramic and an organic binder are mixed, then injected into a mold to obtain a desired shape. In turn, the binder is removed and sintering is performed to prepare a desired shape of porous carrier 120.

On the other hand, a sensor pattern (not shown) may be coupled to the porous carrier 120 to measure temperature. The sensor pattern may be attached in proximity to the two-dimensional pattern 124 to sense a heating temperature of the two-dimensional pattern 124. As described above, since the porous carrier 120 is made of a material with high thermal conductivity, the sensor pattern may be attached to a surface of the porous carrier 120, not near the two-dimensional pattern 124, to measure a heating temperature of the porous carrier 120.

The sensor pattern may be made of any one of NTC thermistor materials including one or more of Mn, Co, Ni and Fe, PTC thermistor materials including one or more of BaTi₃, Y, Ce, La and Sn, Pt and circuit structures capable of reading resistance variations caused by temperature, or a combination thereof.

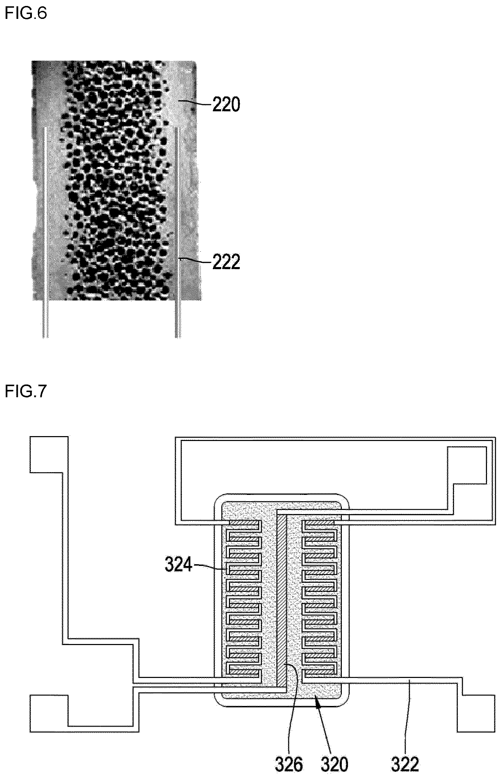

FIG. 6 is a sectional view showing a vaporizing part of a microparticle generator according to a second embodiment of the present invention.

The vaporizing part of the microparticle generator according to the second embodiment of the present invention includes a porous carrier 220 made of any one of Pt, W, Mo, Ni, Ta, Ni-Cr alloys, Fe-Cr alloys, Al₂O₃, ZrO₂, MgO, Si₃N₄, SiC, AiN, MoSi₂ and carbon composites, or a combination thereof, as in the first embodiment. In addition, the vaporizing part includes a heating pattern 222 inserted into the porous carrier 220. The heating pattern 222 supplies power to the porous carrier 220, such that the porous carrier 220 becomes a three-dimensional structure which directly generates heat.

Here, a sensor pattern (not shown) is attached to an outer surface of the porous carrier 220 to sense a heating temperature of the porous carrier 220.

FIG. 7 is a sectional view showing a vaporizing part of a microparticle generator according to a third embodiment of the present invention.

In the third embodiment of the present invention, a heating pattern 324 and a sensor pattern 326 are disposed inside a porous carrier 320 in a three-dimensional shape. Power lines 322 of the heating pattern 324 and the sensor pattern 326 are drawn to the outside of the porous carrier 320 to transfer signals and power. Advantageously, it is possible to more evenly heat the porous carrier 320 and more precisely sense temperature by providing the heating pattern 324 and the sensor pattern 326 inside the porous carrier 320 in a three-dimensional shape.

In the third embodiment of the present invention, the heating pattern 324 is provided as a zigzag structure with several bents while the sensor pattern 326 is provided as a straight structure. However, the heating pattern 324 may be provided as a straight structure while the sensor pattern 326 may be provided as a zigzag structure.

## Claims

1. A vaporizing part of a microparticle generator, comprising:
a porous carrier (120, 220, 320) for absorbing and storing liquid;
a conductive heating pattern (122, 124, 222, 324) coupled to the porous carrier (120, 220, 320) and supplied with power to generate heat; and
a sensor pattern coupled to the porous carrier (120, 220, 320) to measure a heating temperature of the conductive heating pattern (122, 124, 222, 324),
wherein the liquid carried by the porous carrier (120, 220, 320) is vaporized as the conductive heating pattern (122, 124, 222, 324) generates heat.

2. The vaporizing part of claim 1, wherein the porous carrier (120, 220, 320) has a porosity equal to or greater than 10%.

3. The vaporizing part of claim 1 or 2, wherein the heating pattern is provided on an outer surface of the porous carrier (120, 220, 320) as a two-dimensional pattern.

4. The vaporizing part of claim 3, wherein the sensor pattern is attached to a surface of the porous carrier (120, 220, 320) as a two-dimensional pattern to sense a heating temperature of the conductive heating pattern (122, 124, 222, 324).

5. The vaporizing part of any one of claims 1 to 3, wherein the conductive heating pattern (122, 124, 222, 324) is inserted into the porous carrier (120, 220, 320), and the porous carrier (120, 220, 320) itself generates heat and vaporizes the carried liquid as a three-dimensional structure.

6. The vaporizing part of claim 5, wherein the sensor pattern has a two-dimensional pattern or a three-dimensional pattern and is attached to a surface of the porous carrier (120, 220, 320) or inserted into the porous carrier (120, 220, 320) to measure a heating temperature of the porous carrier (120, 220, 320).

7. The vaporizing part of any one of claims 1 to 6, wherein the porous carrier (120, 220, 320) and the conductive heating pattern (122, 124, 222, 324) are made of any one of Pt, W, Mo, Ni, Ta, Ni-Cr alloys, Fe-Cr alloys, Al₂O₃, ZrO₂, MgO, Si₃N₄, SiC, AiN, MoSi₂ and carbon composites, or a combination thereof.

8. The vaporizing part of any one of claims 1 to 7, wherein the sensor pattern is made of any one of NTC thermistor materials including one or more of Mn, Co, Ni and Fe, PTC thermistor materials including one or more of BaTi₃, Y, Ce, La and Sn, Pt and circuit structures capable of reading resistance variations caused by temperature, or a combination thereof.
